Europäisches Patentamt

European Patent Office

Office européen des brevets

(11) Publication number: **0 450 286 B1**

# EUROPEAN PATENT SPECIFICATION

(45) Date of publication of patent specification: **07.09.94** (51) Int. Cl.⁵: **F16H 63/44**, G05G 9/06, B60K 41/08

(21) Application number: **91101990.9**

(22) Date of filing: **13.02.91**

(54) **Gear selection device for a transmission assembly of a motor vehicle.**

(30) Priority: **06.04.90 IT 6726490**

(43) Date of publication of application:
**09.10.91 Bulletin 91/41**

(45) Publication of the grant of the patent:
**07.09.94 Bulletin 94/36**

(84) Designated Contracting States:
**AT DE ES FR GB IT NL SE**

(56) References cited:
**EP-A- 0 122 014**
**EP-A- 0 271 617**
**GB-A- 2 129 509**

(73) Proprietor: **IVECO FIAT S.p.A.**
**Via Puglia 35**
**I-10156 Torino (IT)**

(72) Inventor: **Pigozzi, Gian Maria**
**Via Bazoli, 19**
**I-25100 Brescia (IT)**
Inventor: **Tornatore, Giovanni**
**Via San Martino, 5**
**I-10080 San Benigno Canavese (IT)**

(74) Representative: **Jorio, Paolo et al**
**Studio Torta,**
**Via Viotti, 9**
**I-10121 Torino (IT)**

**Description**

The present invention relates to a gear selection device for a transmission assembly of a motor vehicle, in particular but not exclusively of a commercial vehicle.

Devices of the above type are known, which substantially comprise a lever for manual gear selection, an electronic control processor which can receive first input signals indicating the gear selected by the driver from transducer means connected to the selector lever and secondary input signals indicating the operating conditions of the transmission from sensor means connected to the various members of the transmission itself. The processor is able to control actuating means connected to the gear engagement members, in accordance with predetermined programs. Because the gearboxes used in commercial vehicles and, in particular, in heavy commercial vehicles, provide a high number of gear ratios and it is not always easy to select the optimum ratio, depending on the operating conditions of the vehicle, the known selection devices provide, with various levels of automation, substantially two functions:

1) they verify the operating conditions following the selection of a new gear so as to prevent automatically the engagement of "incorrect" ratios which could, therefore, lead to instability in the operating conditions of the engine ("over-revving" or under-revving");

2) they allow the driver to "jump" one or more gears so as to avoid having to carry out a greater number of successive selection and engagement operations, thereby passing from one engaged gear to another, non-consecutive gear.

In particular, gear selection devices are known, e.g. from EP-A-0 271 617, in which these functions are performed by means of an electronic processor which "counts" and "adds" the pulses given manually to the selector lever in a given change direction and which controls the direct engagement of the final preselected gear, provided that it is compatible with the admissible speed range of the engine. This known solution requires a plurality of successive operations by the driver to effect gear changes which involves "jumping" one or more intermediate gears. This either requires extra attention on the part of the drive who can be distracted from driving or causes a certain amount of delay in the engagement of the gear selected.

Gear selection devices are also known in which the control processor is programmed so as to detect cyclically the various operating parameters of the transmission itself and to process these parameters, in accordance with predetermined strategies, so as to calculate periodically the optimum ratio in a given operating situation and to engage the corresponding gear following manual actuation of the selector lever. This solution reduces considerably the psychophysical attention of the driver with beneficial effects of driving safety but substantially removes from the driver's control the choice of ratio to engage, thereby making it impossible to carry out particular operations which are not within the scope of the control logic of the processor.

It is the aim of the present invention to develop a gear selection device for a transmission assembly of a vehicle, which makes it possible to eliminate the aforementioned disadvantages associated with known devices.

This aim is achieved by the subject matter of claim 1. The present invention is related to a gear selection device in a transmission assembly of a vehicle, the transmission assembly being coupled to a drive shaft of an engine of the vehicle itself and comprising a clutch, a gearbox, actuating means adapted to effect the engagement and disengagement of the gears in said gearbox, and valve means for operating said actuating means, and said device comprising:

- a main lever pivotable in a plane between two opposite selection positions, relative to a central rest position;
- at least a first button arranged at least in the vicinity of the handle of said lever;
- auxiliary selection means which are arranged on said lever at least in the vicinity of said handle and which can be shifted into at least two different selection positions;
- transducer means connected to said main lever and adapted to generate electrical signals indicating the actuation of said main lever and of said auxiliary selection means in each of the respective selection positions, and the actuation of said first button, and
  an electronic processor receiving the electrical signals from said transducer means and generating control signals for said valve means;
  said device being characterised in that said electronic processor unit comprises first processing means adapted to
- generate selection signals for the gear being two steps higher than or lower than that engaged, in response to input signals corresponding to the actuation of said main lever in a first or second of said selection positions,

EP 0 450 286 B1

- to generate selection signals for the gear being four steps higher than or lower than that engaged, in response to input signals corresponding to the combined actuation of said main lever in said first or second selection position and of said first button, and

- to generate selection signals for the next gear being higher than or lower than that engaged, in response to input signals corresponding to the actuation of said auxiliary selection means in a respective first or second selection position,

and control means adapted to generate said control signals for said solenoid valves, in response to said selection signals.

With a view to a better understanding of the present invention, a preferred form of embodiment will be described below non-restrictively by way of example, with reference to the accompanying drawings, wherein:

Fig. 1 illustrates a functional diagram of a transmission assembly for a vehicle provided with a gear selection device developed in accordance with the present invention;

Fig. 2 is a partial view in perspective of a manual gear selector lever for the device in Fig. 1, and

Fig. 3 is a block diagram of a processor for controlling the device in Fig. 1.

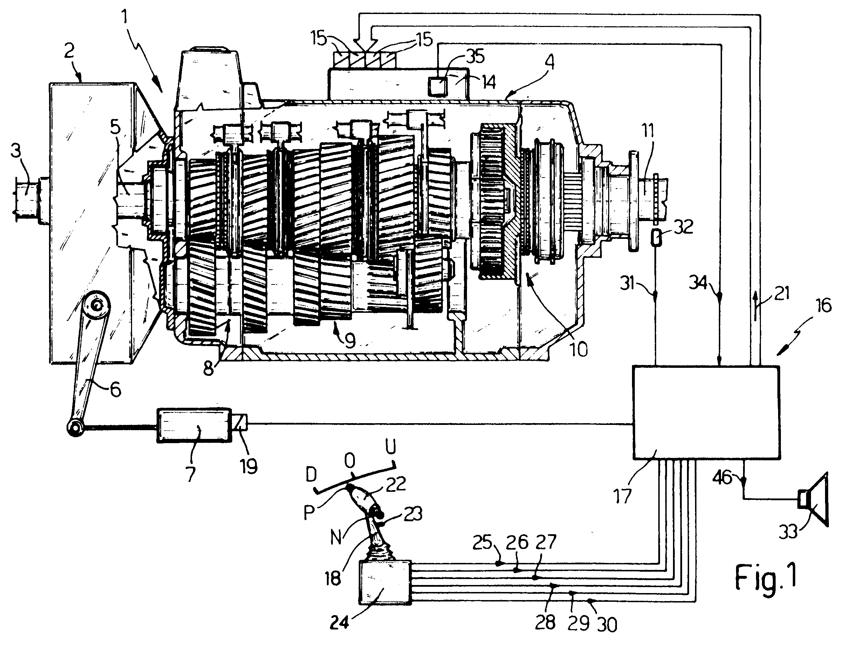

Referring now to Fig. 1, the reference numeral 1 denotes a transmission assembly of a heavy commercial vehicle. The unit 1 comprises a friction clutch 2 adapted to be coupled angularly to a drive shaft 3, only part of which is shown, and a gearbox 4, an input shaft 5 of which is coupled to the driven members (not shown) of the clutch 2.

The clutch 2 can be actuated in a conventional manner, by way of a lever 6, via a hydraulic actuator 7 of conventional type controlled by valve means 13.

The gearbox 4, illustrated schematically, comprises an input stage 8 with two ratios, a main stage 9 with four ratios plus a reverse ratio of the countershaft type, and an output range reduction gear 10 with two ratios, coupled angularly to an output shaft 11 of the gearbox 4. The mechanical construction of the gearbox 4 is well known to persons skilled in the art and will not be described in detail; to simplify the description it is assumed that all the stages of the gearbox are of synchromesh type. However, it is pointed that the construction of the gearbox does not form part of the invention and that, in particular, the gearbox may be of non-synchromesh type; in that case it is possible to provide a synchronising brake acting on the input shaft and an electronic control means for the feed to the engine.

The transmission ratios provided by the main stage 9 of the gearbox 4 define, at least approximately, a geometric progression of common ratio R.

The input stage 8 defines two transmission ratios, the ratio of which is suitably equal or close to the square root of the common ratio of the progression of the gear ratios of the main stage, thereby providing a plurality of ratios defining at least approximately a geometrical progression of common ratio $\sqrt{R}$. For this function, the input stage is designated "splitter" by experts in the art and for the sake of brevity this term will be used in the following.

Therefore, the splitter 8 can be provided in two different configurations, conventionally designated H ("high") and L ("low"), to which correspond respectively a higher and a lower gear (and therefore a respectively lower and higher transmission ratio).

The range reduction gear 10, of epicyclic type, provides two transmission ratios, one of which is unitary (direct drive) and the other is a reduction ratio at least approximately equal to the product of the common ratio of the progression of the main stage and the number of gear ratios (in forward movement) of said stage, in this case $4^*R$, so as to provide in combination therewith and with the splitter 8 two distinct and adjacent ranges of ratios which together define a geometrical progression of common ratio $\sqrt{R}$.

Therefore, the range reduction gear can also be provided in two different configurations, conventionally designated H (high range) and L (low range). Altogether the gearbox 4 thus provides sixteen forward ratios and two reverse ratios (conventionally designated H and L, depending on the corresponding position of the range reduction gear 10).

The engagement of the gears in the gearbox 4 is effected by means of hydraulic actuating means 14, of known type, controlled by solenoid valves 15.

The reference numeral 16 generally designates a gear selector operatively connected to the transmission assembly 1 and forming the subject-matter of the present invention.

The selector 16 comprises an electronic control processor 17, of programmable type, and a main lever 18 for manual gear selection. The processor is adapted to control the aforementioned solenoid valves 15 operating the hydraulic actuators 14 of the gearbox by means of electrical signals 21, and also a solenoid valve 19 operating the actuator 7 controlling the clutch 2, in response to input signals which will be described below. In particular, the lever 18 is pivotable in one plane and is normally retained in a central position O by resilient means (not shown). This lever 18 can be shifted manually into two angular positions

3

in opposite directions, with respect to the central position O, and conventionally designated U ("up") and D ("down").

Two buttons P and N, arranged opposite one another, are provided on a handle 22 of the lever 18. The lever 18 is also provided, in the vicinity of the handle 22, with a small auxiliary lever 23 normally retained in a central position O by resilient means (not shown). This small lever 23 can be shifted manually in a vertical plane into two opposite positions with respect to a central position O and conventionally designated U' ("up") and D' ("down"); the position of the small lever 23 is such that it can be operated simultaneously with operation of the main lever 18.

Transducer means 24 of conventional type are connected to the lever 18 and are adapted to emit to the processor 17 a plurality of electrical signals, in particular the following:

a signal 25 triggered when the main lever 18 is shifted into position U;

a signal 26 triggered when the main lever 18 is shifted into position D;

a signal 27 triggered when the small auxiliary lever 23 is shifted into position U';

a signal 28 triggered when the small auxiliary lever 23 is shifted into position D';

a signal 29 triggered when the button P is pressed.

a signal 30 triggered when the button N is pressed.

The effects of these signals, optionally in combination with one another, will be described in the following with reference to the general mode of operation of the device 16.

In addition, the processor 17 also receives an input signal 31 from a sensor 32 of the angular velocity of the output shaft 11 of the gearbox 4 and input signal 34 from conventional means 35 which detects the gear engaged in the gearbox 4 and which are connected to actuating means 14 for the gearbox.

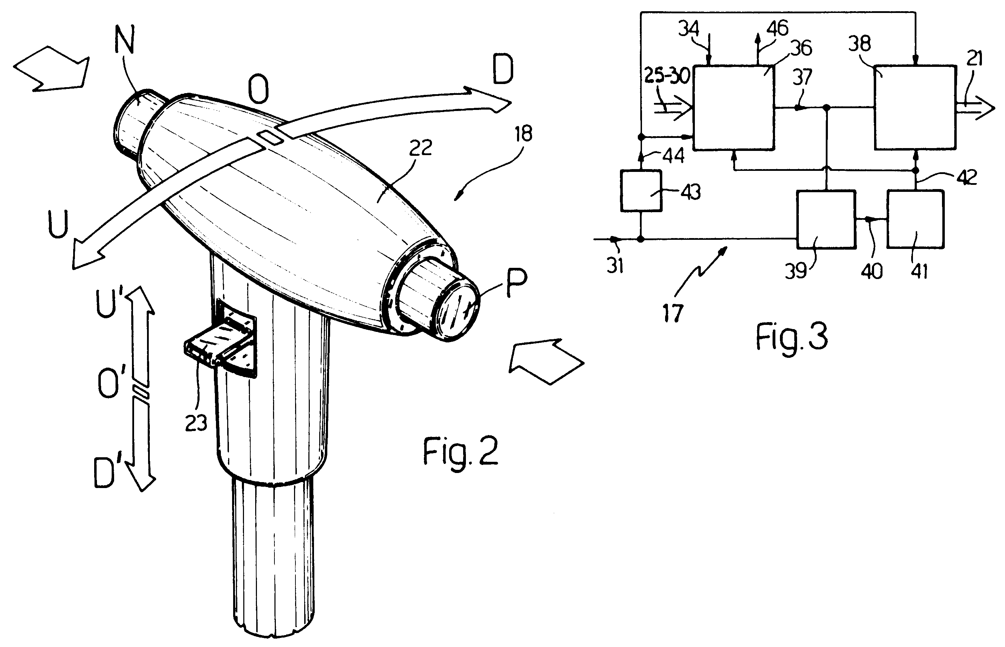

Fig. 3 illustrates a block diagram of the processor 17, with respect to the control means for the gearbox 4; the actuation of the clutch will be briefly described in the following but the means provided in the processor 17 for said actuation are neither illustrated nor described in detail since they are of conventional type.

The processor 17 (Fig. 3) comprises first processing means 36, for example formed by a microprocessor circuit, to which the aforementioned signals 25-30 and 34 are conveyed and which is able to generate, in response to said signals, gear selection signals 37; these signals 37 arrive at a control circuit unit 38 which is able to generate said output signals 21 of the processor 16. The processor 17 also comprises second processing means 39 which receive the input signal 31, which is proportional to the speed $N_u$ of the output shaft 11 of the gearbox and thus to the speed of the vehicle, and the gear selection signals 37 generated by the first processing means 36. The second processing means 36 is adapted to generate, in response to said input signals, a signal 40 indicating the theoretical speed of the drive shaft on the basis of the known equation: $N_i = N_u/T$, wherein $N_i$ is the input speed (unknown) of the gearbox corresponding, at the end of the gear change operation, with the speed of the drive shaft, whilst the transmission ratio T is determined by the signals 37.

The signal 40 is conveyed to a comparator 41, of double type, which verifies whether its value falls within two reference values corresponding to respective nominal speed values of the engine delimiting a speed range in which the engine is required to operate, and in particular corresponding to the speed at maximum engine torque $N_{Cmax}$ and to the speed at maximum engine power $N_{Pmax}$.

The comparator 41 generates an enabling signal 42 for the control unit 38, the logic state of which depends on the result of said comparison. In particular, the output signals 21 are blocked if the signal 40 does not fall within the limit values defined above. The signal 42 conveyed to a subsequent input of the first processing means 36, for the purpose described below.

The processor 16 additionally comprises a second comparator 43 which at its input receives the signal 31 and compares it with a reference value corresponding to a very low speed of the vehicle, for example 0.5 kph. The comparator 43 is able to generate an interrupt signal 44, the logic state of which is dependent on said comparison; for example, this signal may be initiated when the speed of the vehicle is lower than the aforesaid reference value. This signal 44 is conveyed to the first processing means 36, for the purpose of selection of the processing logic and also to the control unit 38 for the purpose of enabling the output signals 21, independently of the state of the signal 42.

Additionally, the first processing means 36 is able to generate an error signal 46 when the combination of input signals is incompatible with the programmed processing logic; this error signal 46 is conveyed to an acoustic warning device 33 which is intended to indicate to the driver that incorrect operations have been effected.

The mode of operation of the device 16 is as follows:

When the vehicle is started, the first processing means 36 of the processor 17 generate a selection signal 37 corresponding to the following configuration of the gearbox 4: splitter 8 in position H, main stage 9 in neutral, range reduction gear 10 in position L. Since the vehicle is stationary, the signal 44 adopts an active logic state, i.e. is "active", and operates the control unit 38 which generates the corresponding signals 21 for controlling the solenoid valves 15, so as to obtain the configuration described.

If the signal 44 is in an operative state the logic of selection of the gears is as follows: With the main lever 18 in position U (signal 25 active), the first processing means 36 generates a selection signal 37 for the second forward gear and the control unit controls the engagement thereof via corresponding signals 21. If at the same time as the actuation of the lever 18 the button P is pressed (signals 25 and 29 active), the fourth forward gear is selected and engaged. Furthermore, the small lever 23 can also be actuated at the same time as or subsequently to the actuation of the lever 18 and, optionally, of the button P; in that case there is selected and engaged the gear higher or lower than that selected by means of the main lever 18 and the button P, according to whether the small lever 23 is moved into position U' (signal 27 active) or D' (signal 28 active). For a better understanding of the relationship between the input signals 25-30 following the manual operation and the selection signals 37 generated by the first processing means 36, a summarising table is set out below, in which with each combination of signals 25-30 there is associated the gear associated with the corresponding signal 37, which may be coded in any known manner (in the table the active logic condition of the signals is indicated by 1, the inactive logic condition by 0).

| 25 | 26 | 27 | 28 | 29 | 30 | Signal / Gear |
|----|----|----|----|----|----|------|
| 1 | 0 | 0 | 0 | 0 | 0 | 2 |
| 1 | 0 | 0 | 0 | 1 | 0 | 4 |
| 1 | 0 | 1 | 0 | 0 | 0 | 3 |
| 1 | 0 | 1 | 0 | 1 | 0 | 5 |
| 1 | 0 | 0 | 1 | 0 | 0 | 1 |
| 1 | 0 | 0 | 1 | 1 | 0 | 3 |

To effect engagement of a reverse gear, while still commencing from the described condition of the gearbox upon starting, the driver has to move the main lever 18 into position D and at the same time press the button P (signals 26 and 29 active). In response to these signals, the first processing means 36 generates the signal 37 corresponding to reverse gear H, the engagement of which is controlled by the control unit 38. However, if the driver also shifts the small lever 23 into position D' (signal 28 active), at the same time as or subsequently to the main lever 28, the processor 17 causes the engagement of reverse gear L.

When the vehicle is moving and, therefore, the signal 44 is inactive, the processor 17 controls the gearbox 4, in response to the input signals 25-30 and 31, on the basis of the following scheme.

In response to the actuation of only the main lever in positions U or D and, therefore, to the triggering of only the signal 25 or 26, the first processing means 36 triggers the signal 37 corresponding to the selection of the second gear, starting from the gear engaged, in the preselected gear change direction.

If the button P is pressed (signals 25 and 28 or 26 and 28 active) at the same time as the lever 18 is actuated in direction U or D, fourth gear is selected, starting from the gear engaged and detected by means of the signal 34, in the preselected gear change direction. Actuation of the auxiliary lever 23 in direction U' or D' (signals 27 or 28 active) effects a unitary increase or decrease in the gear number selected, if it is effected in combination with the actuation of the lever 18 and, optionally of the button P, or alternatively the selection of the gear immediately higher or lower than that currently engaged, if it is effected independently of the lever 18.

For a better understanding of the relationship between the manual operations and the gears selected by the first processing means 36, a summarising table is set out below, in which with each combination of command signals there is associated the corresponding increase or decrease of the gear number, starting from the gear currently engaged (in the table the active logic condition of the signals is indicated by 1, the inactive logic condition by 0); the increase or decrease in the gear number is indicated by $\delta$ ); in the last column there are indicated, by way of example, the gears selected following the various operations, if the gear currently engaged is the ninth.

| 25 | 26 | 27 | 28 | 29 | 30 | Signal / $\delta$ | Ex. |
|----|----|----|----|----|----|------|-----|
| O | O | 1 | O | O | O | +1 | 10 |
| 1 | O | O | 1 | O | O | +1 | 10 |
| 1 | O | O | O | O | O | +2 | 11 |
| 1 | O | 1 | O | O | O | +3 | 12 |
| 1 | O | O | 1 | 1 | O | +3 | 12 |
| 1 | O | O | O | 1 | O | +4 | 13 |
| 1 | O | 1 | O | 1 | O | +5 | 14 |
| O | O | O | 1 | O | O | -1 | 8 |
| O | 1 | 1 | O | O | O | -1 | 8 |
| O | 1 | O | O | O | O | -2 | 7 |
| O | 1 | O | 1 | O | O | -3 | 6 |
| O | 1 | 1 | O | 1 | O | -3 | 6 |
| O | 1 | O | O | 1 | O | -4 | 5 |
| O | 1 | 1 | O | 1 | O | -5 | 4 |

If the gear following the manual operation according to the preceding table does not exist (for example, the selection of the fourth gear higher is inappropriate if the gearbox is positioned in the fourteenth gear and only sixteen gears are available), the first processing means 36 triggers the signal 37 corresponding to the final gear existing in the preselected gear change direction (U or D).

The triggering of the corresponding signal 21 by the control unit 38 and, therefore, the effective engagement of the gear, is subordinate to the condition that the enabling signal 42 is active, i.e. that when the gear has been engaged the gear selected brings about an engine speed within said range of nominal values. If the gear is in admissible or unavailable, the processor 17 effects the engagement of a gear available in the preselected gear change direction, to which corresponds the maximum increase or decrease with respect to that currently engaged; to bring this about, the first processing means 36 selects, in the absence of the enabling signal 42, the gear which corresponds to a unitary reduction in the increase or decrease in the gear number with respect to the preceding selection; the above-described verification is repeated until the signal 42 is triggered and the control unit 38 generates the corresponding signals 21 for switching the solenoid valves.

If, for example, starting from the ninth gear, the fifth gear is selected, the processor verifies that the resultant engine speed does not exceed the value $N_{Cmax}$. If fifth gear is inadmissible, the same verification is carried out with the sixth gear; if this too is inadmissible, it is repeated with the seventh gear and so on. Therefore, it may happen that, following the selection of a multiple increase/decrease in the gear number, a gear is effectively engaged which corresponds to a smaller increase/decrease.

In any operating condition of the vehicle, by actuating the button N (signal 30 active) the first processing means 36 generates a signal 37 selecting the neutral position of the gearbox 4; in response to this signal, whatever the condition of signals 42 and 44, the control means 38 effect the disengagement of the gear in the gearbox 4 by way of the triggering of the corresponding signals 21.

When the gearbox is in neutral (corresponding signal 34 active) and the speed of the vehicle is above said minimum threshold value (signal 44 inactive), the subsequent actuation of the main lever 18 results in the selection of a new gear ratio calculated by the processor 17 on the basis of the speed of the output shaft 11 of the gearbox 4 and the subsequent engagement.

Advantageously, the first processing means 36 selects the new gear ratio on the basis of two different programs, depending on whether the driver moves the lever 18 into position D or U (signal 25 or 26 active). In the first case, a gear ratio is selected which corresponds to a high engine speed, close to $N_{Pmax}$, and in the second case a gear ratio is selected which corresponds to low engine speed, close to $N_{Cmax}$.

The criterion on which this new gear ratio is calculated is as follows: By designating T the transmission ratio of the gearbox 4, $N_i$ the angular velocity of the input shaft 5 of the gearbox 4 and $N_u$ the angular velocity of the output shaft 11, the following equation applies:

$T = N_u/N_i$, wherein $N_u$ is known since it has been determined by the sensor 28. By ascribing to $N_i$ a suitable predetermined value (obviously within the range of admissible engine speed values since, with the clutch engaged, $N_i$ coincides with the speed of the drive shaft), calculation of the optimum value T is immediate upon re-engagement of the gearbox.

If the drive shifts the lever 18 into position U (signal 25 active), the calculation of the optimum value T is effected on the basis of the assumption:

$N_i = N_{Cmax} + K_i$, wherein $K_i$ is a constant, dimensionally homogeneous at an angular velocity expressed in rpm, advantageously between 0 and 400 and, preferably, between 150 and 250 rpm.

If the driver shifts the lever 18 into position D (signal 26 active), the calculation of the optimum value T is effected on the basis of the assumption:

$N_i = N_{Pmax} - K_2$, wherein $K_2$ is a constant, dimensionally homogeneous at an angular velocity expressed in rpm, advantageously between 0 and 500 and, preferably, between 200 and 300 rpm.

The processing means 36 selects the gear whose transmission ratio is nearest the value T thus calculated; the signal 42 is obviously active and, therefore, the control unit 38 controls the engagement of the corresponding gear.

When the speed of the vehicle is lower than said minimum threshold value (signal 44 active), a return to the neutral position can occur not only by operating the button N but also by operating the lever 18. In particular, following the actuation of the lever 18 into position D (signal 26 active) starting from any forward gear ratio, the first processing means 36 selects disengagement of the gear engaged and the control means 38 effects this disengagement. An analogous effect is obtained by shifting the lever 18 into position U (signal 25 active) starting from a reverse gear. As already stated, the processing means 36 ignores commands differing from those described and triggers the error signal 46 and, therefore, the acoustic warning device 33.

For example, the following operations generate error signals:

- small lever 23 in position D in first forward gear;
- small lever 23 in position D in reverse gear L;
- small lever 23 in position U in reverse gear H.

At each of the above-described gear change operations, with the exception of starting-off operations, the clutch 2 is automatically disengaged and subsequently re-engaged by the processor 17.

During starting-off operations, for example when the signal 44 is active, the control of the engagement and disengagement operations is still effected by the processor 17 but in response to the actuation of the clutch pedal (not shown).

EP 0 450 286 B1

The actuator 7, which actuates the clutch 2, is controlled by the processor 17 in a conventional manner which, therefore, is not described in detail.

A study of the features of the device 16 developed in accordance with the invention reveals the advantages which can be achieved thereby.

Above all, it makes it possible to effect "multiple" gear changes in a single operation, completely at the driver's discretion, and to convert automatically the selection scheme of a "multiple" gearbox into that of a gearbox with a smaller increase or decrease in the the gear number, if the gear ratio initially selected results in an inadmissible engine speed; however, the device prevents the engagement of unsuitable gear ratios.

Finally, it is evident that the device 16 described could undergo various modifications, without departing from the scope of the claims of the present invention. In particular, it is possible to vary the circuit means for the processor 17, the number and form (in parallel or series) of the signals received and transmitted by the processor 17. Moreover, the processor 17 can be programmed so as to eliminate control redundancies, i.e. so as to prevent the same gear ratio from being obtained with two different operating combinations of the main lever 18, of the button P and of the auxiliary lever 23. In particular, it is possible to eliminate (thereby rendering them ineffective or else associated with an error signal) control settings in which the lever 18 is disposed in position U and the small lever 23 in position D', or vice versa.

## Claims

1. A gear selection device (14-17) in a transmission assembly (1) of a vehicle, the transmission assembly being coupled to a drive shaft (3) of an engine of the vehicle itself and comprising a clutch (2), a gearbox (4), actuating means (14) adapted to effect the engagement and disengagement of the gears in said gearbox (4) and valve means (15) for operating said actuating means (14), and said device (14-17) comprising:
   - a main lever (18) pivotable in a plane between two opposite selection positions (U, D), relative to a central rest position (O);
   - at least a first button (P) arranged at least in the vicinity of a handle (22) of said main lever (18);
   - auxiliary selection means (23) which are arranged on said main lever (18) at least in the vicinity of said handle (22) and which can be shifted into at least two different selection positions (U', D');
   - transducer means (24) connected to said main lever (18) and adapted to generate electrical signals (25-30) indicating the actuation of said main lever (18) and of said auxiliary selection means (23) in each of the respective selection positions (U, D; U', D'), and the actuation of said first button (P), and
   
   an electronic processor (17) receiving the electrical signals (25, 30) from said transducer means (24) and generating control signals (21) for said valve means (15);
   said device being characterised in that said electronic processor (17) comprises first processing means (36) adapted
   - to generate selection signals (37) for the gear being two steps higher than or lower than that engaged, in response to input signals (25, 26) corresponding to the actuation of said main lever (18) in a first (U) or second (D) of said selection positions,
   - to generate selection signals (37) for the gear being four steps higher than or lower than that engaged, in response to input signals (25, 26, 29) corresponding to the combined actuation of said main lever (18) in said first (U) or second (D) selection position and of said first button (P), and
   - to generate selection signals (37) for the next gear being higher than or lower than that engaged, in response to input signals (27, 28) corresponding to the actuation of said auxiliary selection means in a respective first (U') or second (D') selection position,
   
   and control means (38) adapted to generate said control signals (21) for said solenoid valves (15), in response to said selection signals (37).

2. A device according to Claim 1, characterised in that said first processing means (36) is able to generate selection signals (37) derived from the algebraic sum of the increase/decrease in the gear number resulting from actuation of said main lever (18), optionally in combination with actuation of said first button (P), and of the unitary increase/decrease in the gear number resulting from simultaneous actuation of said auxiliary selection means (23).

8

3. A device according to Claim 1 or 2, characterised in that said processor comprises second processing means (39) able to generate a signal (40) indicating a theoretical speed of said drive shaft (3) at the end of the operation to engage the gear ratio selected in response to an input signal (31) indicating the output speed of said gearbox and to said selection signals (37), said processor also comprising comparator means (41) adapted to verify whether the value of said theoretical speed is within a pair of predetermined nominal values ($N_{Cmax}$, $N_{Pmax}$) so as to emit an enabling signal (42) for said control means (38).

4. A device according to Claim 3, characterised in that said first processing means (36) is adapted to generate selection signals (37) for the gear ratio corresponding to a unitary increase/decrease in the gear number in the absence of said enabling signal (42).

5. A device according to any one of the preceding Claims, characterised in that said lever (18) comprises a second button (N); said first processing means (36), in response to input signals (30) generated by said transducer means (24) resulting from actuation of said second button (N), being able to generate selection signals (37) for the neutral position of said gearbox (4).

6. A device according to any one of the preceding Claims, characterised in that it comprises second threshold comparison means (43) adapted to generate an interrupt signal (44) indicating a vehicle speed below a predetermined minimum threshold value; said first processing means (36) being able, in the presence of said interrupt signal (44) and in the neutral position of said gearbox, to generate selection signals (37) for the second forward gear in response to input signals (25) corresponding to the actuation of said main lever (18) in said first selection position (U), to generate selection signals (37) for the fourth forward gear in response to input signals (25, 29) corresponding to the combined actuation of said main lever (18) in said first selection position (U) and of said first button (P), and to generate selection signals (37) for the first forward gear in response to input signals (27) corresponding to the actuation of said auxiliary selection means (23) in said respective first selection position (U'); said control means (38) being able to generate said control signals (21) for said solenoid valves (15) in response to said selection signals (37).

7. A device according to Claim 6, characterised in that, in the presence of said (interrupt) (44) and in the neutral position of said gearbox, said first processing means (36) is able to generate selection signals (37) for a first reverse ratio (H) in response to input signals (26, 29) corresponding to the combined actuation of said main lever (18) in said second selection position (D) and of said first button (P),and is able to generate selection signals for a second reverse ratio (L) in response to input signals (26, 28, 29) corresponding to the combined actuation of said main lever (18) in said second selection position (D), of said first button (P) and of said auxiliary selection means (23) in the respective second selection position (D'); said control means (38) being able to generate said control signals (31) for said solenoid valves (15) in response to said selection signals (37).

8. A device according to any one of the preceding Claims, characterised in that, in response to input signals (26) corresponding to the actuation of said main lever (18) in said second selection position (D) and starting from a neutral position of said gearbox (4), said first processing means (36) is able to generate selection signals (37) for the gear ratio which is optimally closest to the transmission ratio T defined by the equation: $T = N_u/(N_{Cmax} + K_1)$, wherein $N_u$ is the output speed of the gearbox, $N_{Cmax}$ is the engine speed at maximum torque and $K_1$ is a constant of between 0 and 400 rpm and, preferably, between 150 and 250 rpm.

9. A device according to any one of the preceding Claims, characterised in that in response to input signals (25) corresponding to the actuation of said main lever (18) in said first selection position (U) and starting from a neutral position of said gearbox, said first processing means is able to generate selection signals (37) for the gear ratio which is optimally closest to the transmission ratio T defined by the equation: $T = N_u/(N_{Pmax} - K_2)$, wherein $N_u$ is the output speed of the gearbox, $N_{Pmax}$ is the speed at maximum engine power and $K_2$ is a constant of between 0 and 500 rpm and, preferably, between 200 and 300 rpm.

10. A device according to any one of the preceding Claims, characterised in that said first processing means (36) is able to generate selection signals (37) for neutral in response to said interrupt signal (44) and input signals (25) corresponding to the actuation of said main lever (18) in said first position (U) starting from a reverse gear ratio, and in said second position (D) starting from a forward gear ratio.

11. A device according to any one of the preceding Claims, characterised in that said auxiliary selection means comprise a small auxiliary lever (23) disposed in the vicinity of the handle (22) of said main lever (18) and which can be shifted between two opposing selection positions (U', D') with respect to a central rest position (O').

12. A device according to any one of the preceding Claims, characterised in that said first processing means (36) is able to generate an error signal (46) in response to incongruent input signals, said error signals actuating an acoustic warning device (33).

13. A device according to any one of the preceding Claims, characterised in that said gearbox (4) comprises, in cascade arrangement, a "splitter" stage (8) defining at least one first and one second transmission ratio (L, H) corresponding to a lower and higher gear ratio, a main stage (9) defining a plurality of forward ratios, at least one transmission ratio in reverse and a neutral position, and a range reduction gear stage (10) defining at least one first and one second transmission ratio (L, H) corresponding to two respectively lower and higher ranges of gear ratios.

14. A device according to Claim 12, characterised in that said first processing means (36) is able to generate, upon starting the vehicle, selection signals for said second ratio (H) of said splitter, for neutral in said main stage and for said first ratio (L) in said range reduction gear.

## Patentansprüche

1. Gangschalteinrichtung (14-17) für eine Getriebeanordnung (1) eines Fahrzeugs, welche Getriebeanordnung mit einer Antriebswelle (3) einer Maschine des Fahrzeugs selbst verbunden ist, mit einer Kupplung (2), einem Getriebe (4), einer Betätigungseinrichtung (14), die den Eingriff und die Trennung der Zahnräder in dem Getriebe (4) bewirkt, und Ventileinrichtungen (15) zur Betätigung der Betätigungseinrichtung (14), welche Einrichtung (14-17) umfaßt:
   - einen Haupthebel (18), der in einer Ebene zwischen zwei gegenüberliegenden Wahlpositionen (U,D) in bezug auf eine mittlere Ruheposition (O) schwenkbar ist,
   - wenigstens einen ersten Knopf (P), der wenigstens in der Nähe eines Handgriffes (22) den Haupthebels (18) angeordnet ist,
   - eine Hilfswahleinrichtung (23), die an dem Haupthebel (18) wenigstens in der Nähe des Handgriffs (22) angeordnet Ist und die in wenigstens zwei unterschiedlichen Wahlpositionen (U',D') verschoben werden kann,
   - eine Wandlereinrichtung (24) in Verbindung mit dem Haupthebel (18) zur Erzeugung von elektrischen Signalen (25-30), die die Betätigung des Haupthebels (18) und der Hilfswahleinrichtung (23) in Jeder der Jeweiligen Wahlpositionen (U,D;U',D') sowie die Betätigung des ersten Knopfes (P) anzeigen, und
   - einen elektronischen Prozessor (17), der die elektrischen Signale (25-30) der Wandlereinrichtung (24) aufnimmt und Steuersignale (21) für die Ventileinrichtung (15) erzeugt,
   welche Einrichtung dadurch **gekennzeichnet** ist, daß
   - der elektronische Prozessor (17) eine erste Rechnereinrichtung (36) umfaßt, die vorgesehen ist zur Erzeugung von Wahlsignalen (37) für den um zwei Stufen höheren oder tieferen Gang als der jeweils in Eingriff befindliche entsprechend den Eingangssignalen (25,26), die der Betätigung des Haupthebels (18) in einer ersten (U) oder zweiten (D) der Wahlpositionen entsprechen,
   - zur Erzeugung von Wahlsignalen (37) für den Gang, der um vier Stufen höher oder tiefer als der jeweils in Eingriff befindliche ist, entsprechend den Eingangssignalen (25,26,29), die der kombinierten Betätigung des Haupthebels (18) in der ersten (U) oder zweiten (D) Wahlposition und des ersten Knopfes (P) entsprechen, und
   - zur Erzeugung von Wahlsignalen (37) für den nächsten Gang, der höher oder tiefer als der in Eingriff befindliche ist, entsprechend Eingangssignalen (27,28), die der Betätigung der Hilfswähleinrichtung in einer ersten (U') oder zweiten (D') Wahlposition entsprechen,
   - und eine Steuereinrichtung (38) zur Erzeugung der Steuersignale (21) für die Magnetventile (15) entsprechend den Wahlsignalen (37).

2. Einrichtung nach Anspruch 1, dadurch **gekennzeichnet**, daß die erste Prozessoreinrichtung (36) in der Lage ist zur Erzeugung von Wahlsignalen (37), die abgeleitet ist von der algebraischen Summe der Zunahme oder Abnahme der Gangzahl entsprechend der Betätigung des Haupthebels (18), ggfs. in Kombination mit der Betätigung des ersten Knopfes (P), und der einheitlichen Vergrößerung/Verkleinerung der Gangzahl als Ergebnis gleichzeitiger Betätigung der Hilfswahleinrichtung (23).

3. Einrichtung nach Anspruch 1 oder 2, dadurch **gekennzeichnet**, daß der Prozessor eine zweite Rechnereinrichtung (39) umfaßt, die in der Lage ist, ein Signal (40) zu erzeugen, das eine theoretische Drehzahl der Antriebswelle (3) am Ende da Vorganges des Eingriffs des Übersetzungsverhältnisses, das gewählt worden ist entsprechend einem Eingangssignal (31), das die Ausgangsdrehzahl des Getriebes angibt, und einem Wahlsignal (37), welcher Prozessor auch einen Komparator (41) umfaßt, der vorgesehen ist zur Prüfung, ob der Wert der theoretischen Drehzahl innerhalb eines Paares von vorgegebenen Nominalwerten ($N_{Cmax}$, $N_{Pmax}$) liegt, und damit ein Freigabesignal (42) für die Steuereinrichtung (38) abgibt.

4. Einrichtung nach Anspruch 3, dadurch **gekennzeichnet**, daß die erste Rechnereinrichtung (38) Wahlsignale (37) für das Übersetzungsverhältnis entsprechend einer einheitlichen Zunahme/Abnahme in der Gangzahl in Abwesenheit des Freigabesignals (42) erzeugt.

5. Einrichtung nach einem der vorhergehenden Ansprüche, dadurch **gekennzeichnet**, daß der Hebel (18) einen zweiten Knopf (N) umfaßt, daß die erste Rechnereinrichtung (36) entsprechend den Eingangssignalen (30), die durch die Wandlereinrichtung (24) als Ergebnis der Betätigung des zweiten Knopfes (N) erzeugt werden, Wahlsignale (37) für die neutrale Stellung da Getriebes (4) erzeugen kann.

6. Einrichtung nach einem der vorhergehenden Ansprüche, dadurch **gekennzeichnet,** daß sie einen zweiten Stellenwert-Komparator (43) umfaßt, der da-für vorgesehen ist, ein Unterbrechungssignal (44) zu erzeugen, das anzeigt, daß die Fahrzeuggeschwindigkeit unter einem vorgegebenen minimalen Schwellenwert liegt, daß die erste Rechnereinrichtung (36) in der Lage ist, in Anwesenheit des Unterbrechungssignals (44) und in der neutralen Stellung des Getrieben Wahlsignale (37) für den zweiten Vorwärtsgang entsprechend den Eingangssignalen (25) entsprechend du Betätigung des Haupthebels (18) in die erste Position (U), Wahlsignale (37) für den vierten Vorwärtsgang entsprechend den Eingangssignalen (25,29) entsprechend der kombinierten Betätigung des Haupthebels in die erste Wahlposition (U) und des ersten Knopfes. und Wahlsignale (37) für den ersten Vorwärtsgang entsprechend Eingangssignalen (27) entsprechend der Betätigung der Hilfswahleinrichtung (23) in die erste Wahlposition (U') zu erzeugen, welche Steuereinrichtung (38) In der Lage ist, die Steuersignale (21) für die Magnetventile (15) entsprechend den Wahlsignalen (37) zu erzeugen.

7. Einrichtung nach Anspruch 6, dadurch **gekennzeichnet,** daß in Anwesenheit des Unterbrechungssignals (44) in der neutralen Position des Getriebes die erste Rechnereinrichtung in der Lage ist, Wahlsignale (37) für einen ersten Rückwärtsgang (H) entsprechend den Eingangssignalen (26,29) entsprechend der kombinierten Betätigung des Hauptwahlhebels (18) in die zweite Wahlposition (D) und des ersten Knopfes (P) und zur Erzeugung von Wahlsignalen für einen zweiten Rückwärtsgang (L) entsprechend den Eingangssignalen (26,28,29) entsprechend der kombinierten Betätigung des Hauptwahlhebels (18) in die zweite Wahlposition (D), des ersten Knopfes (P) und der Hilfswahleinrichtung (23) in die zweite Wahlposition (D') zu erzeugen, wobei die Steuereinrichtung (38) in der Lage ist, die Steuersignale (31) für die Magnetventile (15) entsprechend den Wahlsignalen (37) zu erzeugen.

8. Einrichtung nach einem der vorhergehenden Ansprüche, dadurch **gekennzeichnet,** daß entsprechend den Eingangssignalen (26) entsprechend der Betätigung des Hauptwahlhebels (18) in der zweiten Wahlposition (D) und beginnend aus einer neutralen Position des Getriebes (4) die erste Rechnereinrichtung (36) in der Lage ist, Wahlsignale (37) für das Übersetzungsverhältnis zu erzeugen, das möglichst dicht an dem Übertragungsverhältnis (T) ist, das definiert ist durch die Gleichung $T = N_u/(N_{Cmax} + K_1)$, in welcher $N_u$ die Ausgangsdrehzahl des Getriebes, $N_{Cmax}$ die Maschinendrehzahl bei maximalem Drehmoment und $K_1$ eine Konstante zwischen 0 und 400 U/min. ist, vorzugsweise zwischen 150 und 250 U/min.

9. Einrichtung nach einem der vorhergehenden Ansprüche, dadurch **gekennzeichnet**, daß entsprechend den Eingangssignalen (25) entsprechend der Betätigung des Hauptwahlhebels (18) in der ersten Wahlposition (U) und beginnend von einer neutralen Position des Getriebes die erste Rechnereinrichtung in der Lage ist, Wahlsignale (37) für das Übersetzungsverhältnis zu erzeugen, daß möglichst nah an einem Übertragungsverhältnis (T) ist, das durch die Gleichung $T = N_u/(N_{Pmax}-K_2)$ liegt, In welcher $N_u$ die Ausgangsdrehzahl des Getriebes, $N_{Pmax}$ die Drehzahl bei maximaler Maschinenleistung und $K_2$ eine Konstante zwischen 0 und 500 U/min., vorzugsweise zwischen 200 und 300 U/min ist.

**10.** Einrichtung nach einem der vorhergehenden Ansprüche, dadurch **gekennzeichnet**, daß die erste Rechnereinrichtung (36) in der Lage ist, Wahlsignale (37) für die neutrale Position entsprechend dem Unterbrechungssignal (44) und Eingangssignale (25) entsprechend der Betätigung des Hauptwahlhebels (18) in die erste Position (U), beginnend von einem Rückwärts-Übersetzungsverhältnis, und in der zweiten Position (D) beginnend von einem Vorwärts-Übersetzungsverhältnis, zu erzeugen.

**11.** Einrichtung nach einem der vorhergehenden Ansprüche, dadurch **gekennzeichnet**, daß die Hilfswahleinrichtung einen kleinen Hilfswahlhebel (23) umfaßt, der in der Nähe des Handgriffes (22) den Hauptwahlhebels (18) angeordnet ist und der verschoben werden kann zwischen zwei gegenüberliegenden Wahlpositionen (U',D') in bezug auf eine zentrale Ruheposition (O').

**12.** Einrichtung nach einem der vorhergehenden Ansprüche, dadurch **gekennzeichnet**, daß die erste Rechnereinrichtung in der Lage ist, ein Fehlersignal (46) entsprechend inkongruenten Eingangssignalen zu erzeugen, welche Fehlersignale eine akustische Warneinrichtung (33) betätigen.

**13.** Einrichtung nach einem der vorhergehenden Ansprüche, dadurch **gekennzeichnet**, daß das Getriebe (4), in Kaskadenanordnung, eine Spaltstufe (8) umfaßt, die wenigstens ein erstes und ein zweiten Übersetzungsverhältnis (L,H) entsprechend einem niedrigeren und einem höheren Übersetzungsverhältnis bildet, wobei eine Hauptstufe (9) eine Anzahl von Vorwärts-Übersetzungsverhältnisses, wenigstens ein Übertragungsverhältnis in Rückwärtsrichtung und wenigstens ein erstes und ein zweites Übertragungsverhältnis (L,H) entsprechend niedrigeren und höheren Bereichen des Übersetzungsverhältnisses umfaßt.

**14.** Einrichtung nach Anspruch 12, dadurch **gekennzeichnet,** daß die erste Rechnereinrichtung (36) in der Lage ist, bei einem Starten des Fahrzeugs Wahlsignale für das zweite Verhältnis (H) der Spalteinrichtung für die Neutralstellung in der Hauptstufe und für das erste Verhältnis (L) in dem Bereichsreduktionsgetriebe zu erzeugen.

## Revendications

**1.** Dispositif de sélection de vitesse (14 à 17) d'une transmission (1) d'un véhicule, la transmission étant couplée à un arbre d'entraînement (3) d'un moteur du véhicule même et comprenant un embrayage (2), une boîte de vitesses (4), un moyen d'actionnement (14) adapté de façon à effectuer l'engagement et le désengagement des engrenages dans ladite boîte de vitesse (4), et un moyen formant vanne (15) servant à actionner ledit moyen d'actionnement (14), et ledit dispositif (14 à 17) comprenant :
- un levier principal (18) pouvant pivoter dans un plan, entre deux positions de sélection (U, D), opposées par rapport à une position de repos (O) centrale;
- au moins un premier bouton (P) disposé au moins à proximité d'une poignée (22) dudit levier principal (18);
- des moyens de sélection (23) auxiliaires, disposés sur ledit levier principal (18), au moins à proximité de ladite poignée (22) et qui peuvent être décalés vers au moins deux positions de sélection (U', D') différentes;
- un moyen transducteur (24) relié audit levier principal (18) et adapté de façon à produire des signaux électriques (25 à 30) indiquant l'actionnement dudit levier principal (18) et desdits moyens de sélection (23) auxiliaires dans chacune des positions de sélection (U, D; U', D'), et l'actionnement dudit premier bouton (P), et
un processeur électronique (17) recevant les signaux électriques (25 à 30) provenant dudit moyen transducteur (24) et produisant des signaux de commande (21) destinés audit moyen formant vanne (15),
ledit dispositif étant caractérisé en ce que ledit processeur électronique (17) comprend un premier moyen de traitement (36) adapté de façon à :

- produire des signaux de sélection (37) destinés à la vitesse qui est situé deux étages plus haut ou plus bas que celui engrené, en réponse à des signaux d'entrée (25, 26) correspondant à l'actionnement dudit levier principal (18), dans une première (U) ou une deuxième (D) position parmi lesdites positions de sélection,
- produire des signaux de sélection (37) destinés à la vitesse qui est situé quatre étages plus haut ou plus bas que celui engrené, en réponse à des signaux d'entrée (25, 26, 29) correspondant à l'actionnement combiné dudit levier principal (18) dans ladite première (U) ou deuxième (D) position de sélection et dudit premier bouton (P), et à
- produire des signaux de sélection (37) destinés à la vitesse suivante, qui est située plus haut ou plus bas que celle engrenée, en réponse à des signaux d'entrée (27, 28) correspondant à l'actionnement desdits moyens de sélection auxiliaires dans une première (U') ou deuxième (D') position de sélection respective,
- et un moyen de commande (38) adapté de façon à produire lesdits signaux de commande (21) destinés auxdites électrovannes (15), en réponse auxdits signaux de sélection (37).

2. Dispositif selon la revendication 1, caractérisé en ce que ledit premier moyen de traitement (36) est adapté de façon à produire des signaux de sélection (37) déduits à partir de la somme algébrique de l'augmentation/diminution du rapport de transmission résultant de l'actionnement dudit levier principal (18), en option en combinaison avec l'actionnement dudit premier bouton (P), et de l'augmentation/diminution simultanée du rapport de transmission résultant de l'actionnement simultané desdits moyens de sélection (23) auxiliaires.

3. Dispositif selon la revendication 1 ou 2, caractérisé en ce que ledit processeur comprend un deuxième moyen de traitement (39) adapté de façon à produire un signal (40) indiquant une vitesse théorique dudit arbre d'entraînement (3) à la fin de l'opération d'établissement du rapport de transmission sélectionné en réponse à un signal d'entrée (31) indiquant la vitesse de sortie de ladite boîte de vitesses et auxdits signaux de sélection (37), ledit processeur comprenant également un moyen comparateur (41) adapté de façon à vérifier si la valeur de ladite vitesse théorique est comprise dans une fourchette de valeurs nominales ($N_{Cmax}$, $N_{Pmax}$) prédéterminées, de manière à émettre un signal de permission (42) destiné audit moyen de commande (38).

4. Dispositif selon la revendication 3, caractérisé en ce que ledit premier moyen de traitement (36) est adapté de façon à produire des signaux de sélection (37) destinés au rapport de transmission correspondant à une augmentation/diminution simultanée du rapport de transmission, en l'absence dudit signal de permission (42).

5. Dispositif selon l'une quelconque des revendications précédentes, caractérisé en ce que ledit levier (18) comprend un deuxième bouton (N); ledit premier moyen de traitement (36), en réponse à des signaux d'entrée (30) produits par ledit moyen transducteur (24) résultant de l'actionnement dudit deuxième bouton (N), étant adapté de façon à produire des signaux de sélection (37) destinés au point mort de ladite boîte de vitesses (4).

6. Dispositif selon l'une quelconque des revendications précédentes, caractérisé en ce qu'il comprend un deuxième moyen de comparaison de valeur seuil (43) adapté de façon à produire un signal d'interruption (44) indiquant une vitesse de véhicule inférieure à une valeur seuil minimale prédéterminée; ledit premier moyen de traitement (36) étant capable, en la présence dudit signal d'interruption (44) et au point mort de ladite boîte de vitesses, de produire des signaux de sélection (37) destinés à l'engrenage de deuxième vitesse de marche avant, en réponse à des signaux d'entrée (25) correspondant à l'actionnement dudit levier principal (18) dans ladite première position de sélection (U), de produire des signaux de sélection (37) destinés à l'engrenage de quatrième vitesse, en réponse à des signaux d'entrée (25, 29) correspondant à l'actionnement combiné dudit levier principal (18) dans ladite première position de sélection (U) et dudit premier bouton (P), et de produire des signaux de sélection (37) destinés à l'engrenage de première vitesse, en réponse à des signaux d'entrée (27) correspondant à l'actionnement desdits moyens de sélection (23) auxiliaires dans ladite première position de sélection (U') respective; ledit moyen de commande (38) pouvant produire lesdits signaux de commande (21) destinés auxdites électrovannes (15), en réponse auxdits signaux de sélection (37).

**7.** Dispositif selon la revendication 6, caractérisé en ce que, en la présence dudit signal d'interruption (44) et au point mort de ladite boîte de vitesses, ledit premier moyen de traitement (36) est capable de produire des signaux de sélection (37) destinés à un premier rapport de marche arrière (H), en réponse à des signaux d'entrée (26, 29) correspondant à l'actionnement combiné dudit levier principal (18) dans ladite deuxième position de sélection (D) et dudit premier bouton (P), et de produire des signaux de sélection destinés à un deuxième rapport de marche arrière (L), en réponse à des signaux d'entrée (26, 28, 29) correspondant à l'actionnement combiné dudit levier principal (18) dans ladite deuxième position de sélection (D), dudit premier bouton (P) et desdits moyens de sélection (23) auxiliaires dans la deuxième position de sélection (D') respective; ledit moyen de commande (38) étant capable de produire lesdits signaux de commande (21) destinés auxdites électrovannes (15) en réponse auxdits signaux de sélection (37).

**8.** Dispositif selon l'une quelconque des revendications précédentes, caractérisé en ce que, en réponse à des signaux d'entrée (26) correspondant à l'actionnement dudit levier principal (18) dans ladite deuxième position de sélection (D) et à partir du point mort de ladite boîte de vitesses (4), ledit premier moyen de traitement (36) est capable de produire des signaux de sélection (37) destinés au rapport de transmission qui est de façon optimale le plus proche du rapport de transmission T défini par l'équation : $T = N_u/(N_{Cmax} + K_1)$, dans laquelle Nu est la vitesse de sortie de la boîte de vitesse, $N_{Cmax}$ est la vitesse de moteur à un couple maximal et $K_1$ est une constant comprise entre 0 et 400 tr/min et, de préférence, entre 150 et 250 tr/min.

**9.** Dispositif selon l'une quelconque des revendications précédentes, caractérisé en ce que, en réponse à des signaux d'entrée (25) correspondant à l'actionnement dudit levier principal (18) dans ladite première position de sélection (U) et à partir du point mort de ladite boîte de vitesse, ledit premier moyen de traitement peut produire des signaux de sélection (37) destinés au rapport de transmission qui est de façon optimale le plus proche du rapport de transmission T défini par l'équation : $T = N_u/(N_{Pmax} - K_2)$, dans laquelle $N_u$ est la vitesse de sortie de la boîte de vitesse, $N_{Pmax}$ est la vitesse à une puissance de moteur maximale et $K_2$ est une constant comprise entre 0 et 500 tr/min et, de préférence, entre 200 et 300 tr/min.

**10.** Dispositif selon l'une quelconque des revendications précédentes, caractérisé en ce que ledit premier moyen de traitement (36) peut produire des signaux de sélection (37) destinés au point mort, en réponse audit signal d'interruption (44) et à des signaux d'entrée (25) correspondant à l'actionnement dudit levier principal (18) dans ladite première position (U), à partir d'un rapport de transmission de marche arrière, et dans ladite deuxième position (D), à partir d'un rapport de transmission de marche avant.

**11.** Dispositif selon l'une quelconque des revendications précédentes, caractérisé en ce que lesdits moyens de sélection auxiliaires comprennent un petit levier (23) auxiliaire, disposé à proximité immédiate de la poignée (22) dudit levier principal (18) et qui peut être décalé entre deux positions de sélection (U', D') opposées par rapport à une position de repos (O') centrale.

**12.** Dispositif selon l'une quelconque des revendications précédentes, caractérisé en ce que ledit premier moyen de traitement (36) peut produire un signal d'erreur (46) en réponse à des signaux d'entrée incompatibles, lesdits signaux d'erreur provoquant l'actionnement d'un dispositif d'avertissement sonore (33).

**13.** Dispositif selon l'une quelconque des revendications précédentes, caractérisé en ce que ladite boîte de vitesses (4) comprend, selon une disposition en cascade, un étage "doubleur de gamme" (8) définissant au moins un premier et un deuxième rapport de transmission (L, H) correspondant à un rapport de transmission faible et élevé, un étage principal (9) définissant une pluralité de rapports de marche avant, au moins un rapport de transmission dans une position de marche arrière et au point mort, et un étage d'engrenage de réduction de plage (10) définissant au moins un premier et un deuxième rapport de transmission (L, H) correspondant à deux plages respectivement faible et élevée de rapports de transmission.

**14.** Dispositif selon la revendication 12, caractérisé en ce que ledit premier moyen de traitement (36) peut produire, lors du démarrage du véhicule, des signaux de sélection destinés audit deuxième rapport (H) dudit doubleur de gamme, au point mort dans ladite plage principale et audit premier rapport (L) dudit engrenage de réduction de plage.

Fig.1

Fig. 3

Fig. 2